# EUROPEAN PATENT APPLICATION

(11) **EP 1 850 021 A1**
(43) Date of publication of application: **31.10.2007**
(21) Application number: 06713765.3
(22) Date of filing: 15.02.2006
(51) Int. Cl.: F16C 35/077, F16C 19/06, F16C 19/26, F16C 33/58, F16C 33/62

(54) **ROLLING BEARING**

(30) Priority: 17.02.2005 JP 2005040326
(71) Applicant: NTN Corporation, Osaka-shi, Osaka 550-0003 (JP)
(72) Inventor: SONE, Katsunori, hikata, Kuwana-shi, Mie, 5110811 (JP); KONDOU, Hiromitsu, hikata, Kuwana-shi, Mie, 5110811 (JP); HIRAMATSU, Kengo, hikata, Kuwana-shi, Mie, 5110811 (JP)
(74) Representative: Grosse, Wolfgang
(86) International application number: PCT/JP2006/302624
(87) International publication number: WO 2006/088045

(57) **Abstract**

A four-point contact ball bearing (11) comprises an inner ring (12), an outer ring (13), balls (14) arranged between the inner ring (12) and the outer ring (13), and a retainer (15) holding the intervals of the balls (14). The outer ring (13) has a flat surface (13a) cut by a plane connecting any one point of its outer diameter surface to any two points of its end face.

## Description

### TECHNICAL FIELD

The present invention relates to a rolling bearing and more particularly to a rolling bearing having an insulation layer on its race ring.

### BACKGROUND ART

Conventionally, the rolling bearing has comprised an anticreep device disclosed in Japanese Utility Model Publication No. 7-8913, for example to prevent a creep from being generated between a housing and an outer ring at the time of rotation.

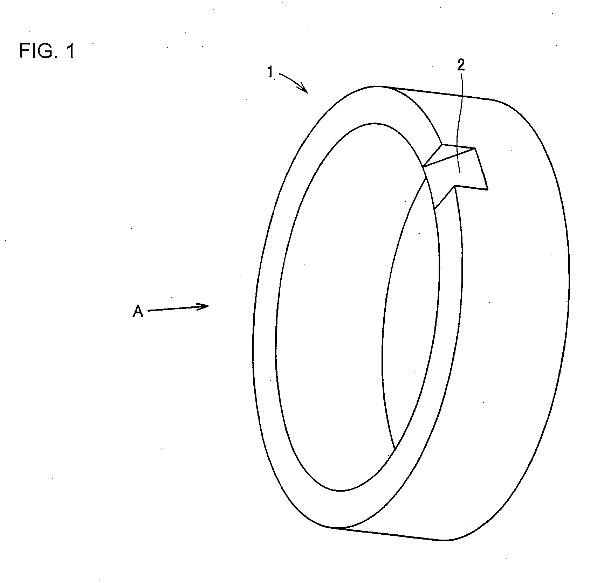

There are various kinds of anticreep devices, and a rolling bearing having an outer ring as shown in Fig. 1 has been known in general.

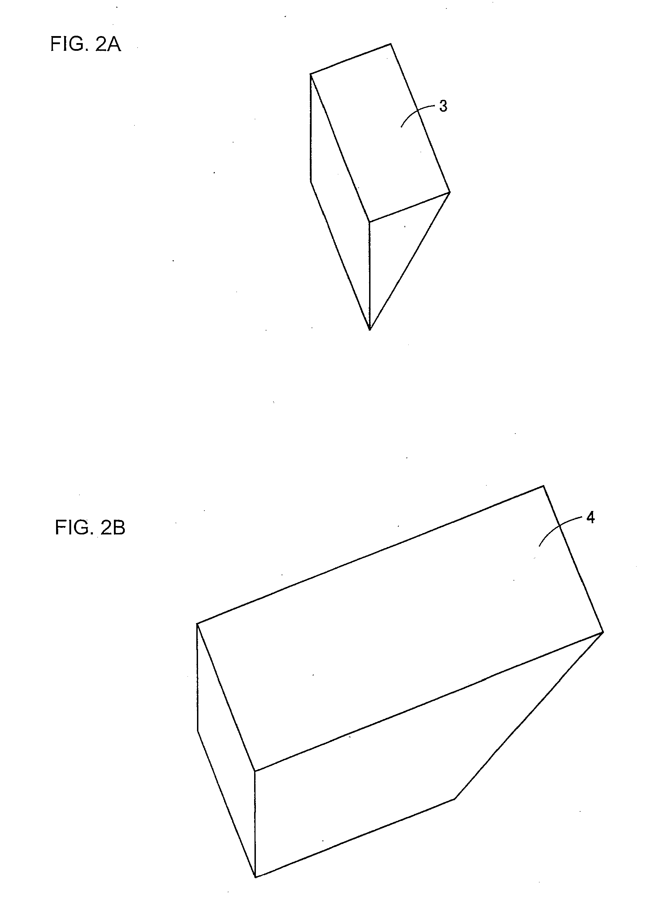

According to Fig. 1, a notch 2 having a certain width is provided from the outer diameter surface to the end face of an outer ring 1. In addition, Figs. 2A and 2B show keys 3 and 4 corresponding to the notch 2.

When the rolling bearing having the outer ring 1 as shown in Fig. 1 is mounted to a shaft, a recessed part is provided at a part corresponding to the notch 2, in the housing and the housing and the outer ring 2 are fixed by the key 3, whereby a creep is prevented.

As a bearing for supporting a rotation shaft of an electric motor including a railcar main electric motor, a wind power generator, an inverter motor or the like, an insulated bearing having an insulation layer on its outer ring is used.

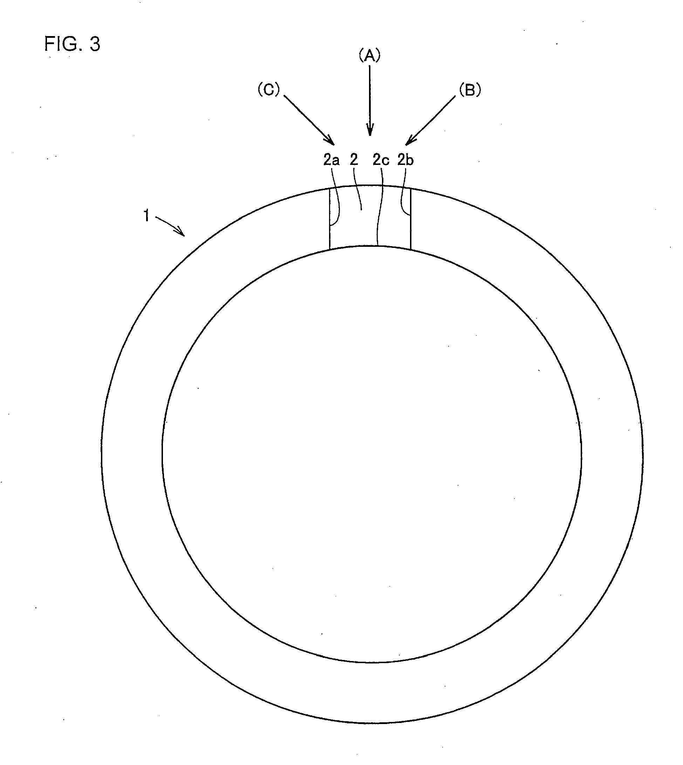

According to the outer ring 1 having the anticreep device as shown in Fig. 1, since it has a complicated structure like the notch 2, its finish processing becomes very complicated. Especially, when the notch 2 is small in dimension and the insulation film is formed, since its finish processing cannot be performed by a machine and it has to be manually processed in some cases, the number of processing steps of the bearing is increased. Furthermore, the finish processing for notched wall surfaces 2a and 2b shown in Fig. 3 cannot be performed in some cases.

In addition, since the contact area between the notch 2 and the key 3 is small, the key 3 is largely abraded due to the vibration at the time of the rotation of the bearing, so that the structure is not superior in durability. In order to increase the contact area, it is considered to increase the size of the notch 2, however, it is limited in order to maintain the strength of the bearing itself.

According to the insulated bearing, the insulation film is formed on its outer diameter surface by spraying ceramic and the like to the outer ring. In the case where the insulation film is sprayed to the outer ring having the anticreep device as shown in Fig. 1, when it is assumed that the insulation film is sprayed from direction "A" as shown in Fig. 3, the insulation film is not sufficiently formed on both wall surfaces 2a and 2b of the notch.

In this case, when the insulation film is to be formed on the wall surface 2a, the spraying needs to be performed from direction "B" and when the insulation film is to be formed on the wall surface 2b, the spraying needs to be performed from direction "C". As a result, the number of spraying steps is increased.

In addition, when the spraying is performed from the two directions "B" and "C", the spraying is performed to a bottom 2c of the notch 2 and the vicinity of the notch 2 twice, which causes a variation in film thickness of the insulation film at each part.

Still furthermore, at the corner parts formed between both wall surface 2a and 2b and the bottom 2c of the notch 2, the film is likely to be damaged by stress concentration, which lowers the insulation performance of the bearing.

### DISCLOSURE OF THE INVENTION

Thus, it is an object of the present invention to provide a rolling bearing comprising an anticreep device in which its finish processing is simple and an anticreep function is prevented from being lowered due to abrasion.

In addition, when the above bearing is applied to a bearing having an insulation layer, it is an object of the present invention to provide a rolling bearing comprising an anticreep device in which the number of spraying steps of the insulation film is reduced, a film thickness is easily managed, and the insulation film is prevented from being damaged due to stress concentration at the time of rotation.

A rolling bearing according to the present invention comprises an inner ring, an outer ring, and rolling elements arranged between the inner ring and the outer ring, and the outer ring has a flat surface cut by a plane connecting any one point of its outer diameter surface to any two points of its end face.

According to the above constitution, as compared with the conventional constitution, since the anticreep device has a simple structure, its finish process can be simple and the number of processing steps can be reduced.

In addition, since the contact area between the cut flat surface and the key is large, the contact stress between both members is small, so that abrasion of the key due to vibration and the like can be prevented, and a high anticreep function can be maintained for a long period of time.

The rolling bearing is preferably an insulated bearing in which an insulation film is formed on the outer diameter surface of the outer ring or the inner diameter surface of the inner ring. According to the rolling bearing having the above constitution, even when the insulation film is formed on the surface of the anticreep device, since the insulation film can be formed on the cut flat surface and its vicinity by spraying from one direction, the number of spraying steps can be reduced. In addition, the film thickness of the insulation film can be easily uniformed at each part.

Furthermore, since there is no corner part bending inside in the cut flat surface, stress concentration is not generated, so that the insulation performance of the bearing is not lowered due to the damage of the insulation film, and the rolling bearing can be superior in durability.

The rolling element may be a ball or a roller.

According to the present invention, there is provided the rolling bearing comprising the anticreep device in which its finish processing is simple and the anticreep function can be maintained for a long period of time.

Furthermore, when it is applied to the insulated bearing, there can be provided the rolling bearing comprising the anticreep device in which the number of spraying steps of the insulation film can be reduced and the film thickness is easily managed and the insulation film can be prevented from being damaged due to the stress concentration at the time of the rotation.

### BRIEF DESCRIPTION OF DRAWINGS

Fig. 1 is a perspective view showing an outer ring used in a rolling bearing provided with a conventional anticreep device;
Fig. 2A is a perspective view showing one example of a key corresponding to a notch of the outer ring in Fig. 1;
Fig. 2B is a perspective view showing another example of a key corresponding to the notch of the outer ring in Fig. 1;
Fig. 3 is a front view showing the outer ring viewed from a direction shown by an arrow "A" shown in Fig. 1;
Fig. 4A is a front view showing a four-point contact bearing according to one embodiment of the present invention;
Fig. 4B is a side sectional view showing the four-point contact bearing according to one embodiment of the present invention;
Fig. 5 is a perspective view showing an outer ring used in the four-point contact ball bearing shown in Fig. 4;
Fig. 6A is a perspective view showing one example of a key corresponding to a cut flat surface of the outer ring shown in Fig. 5; and
Fig. 6B is a perspective view showing another example of a key corresponding to the cut flat surface of the outer ring shown in Fig. 5.

### BEST MODE FOR CARRYING OUT THE INVENTION

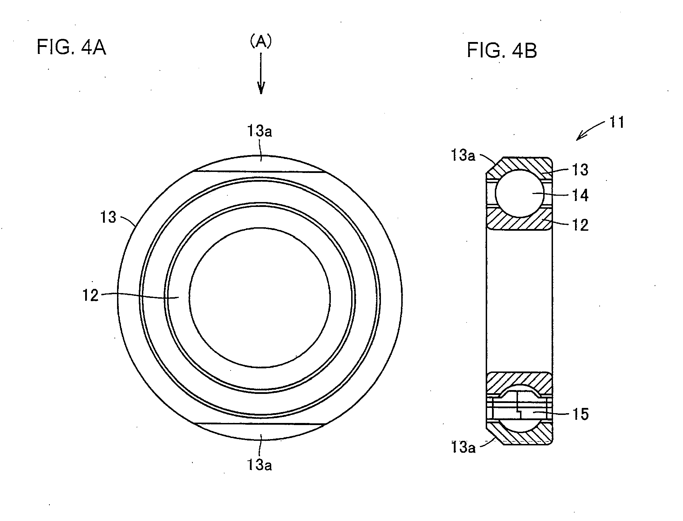

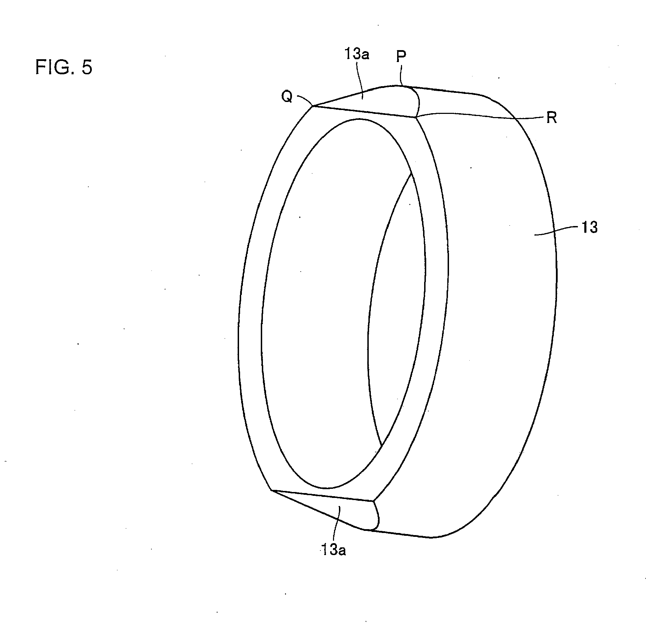

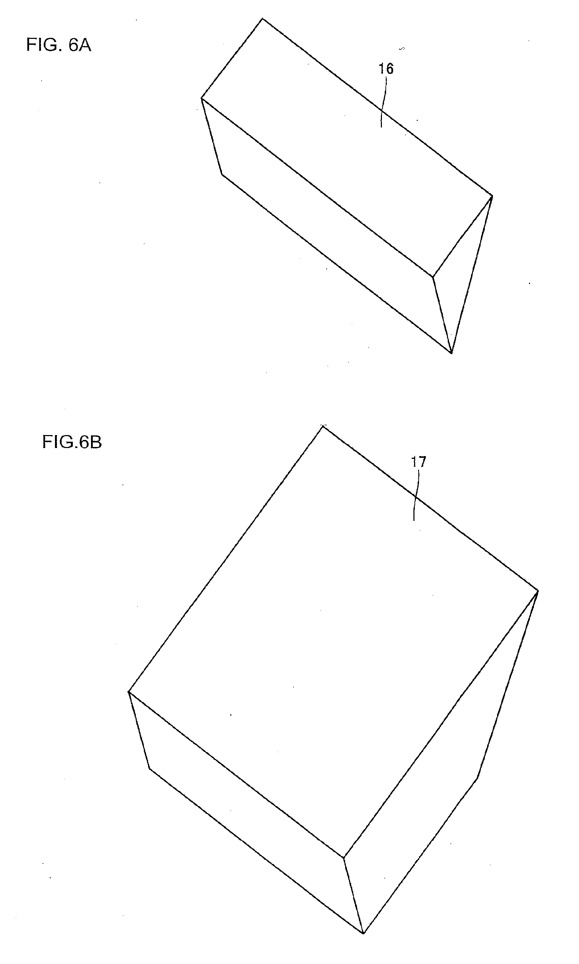

Figs. 4A and 4B are front view and side sectional view showing a four-point contact ball bearing 11, respectively according to one embodiment of the present invention. In addition, Fig. 5 is a perspective view showing an outer ring 13 used in the four-point contact ball bearing 11 as shown in Figs. 4A and 4B. Furthermore, Figs. 6A and 6B are perspective views showing keys 16 and 17 for fixing the outer ring 13 to a housing.

As shown in Fig. 4A, the four-point contact ball bearing 11 comprises an inner ring 12, the outer ring 13, balls 14 arranged between the inner ring 12 and the outer ring 13 as rolling elements, and a retainer 15 holding intervals of the balls 14. As shown in Fig. 5, the outer ring 13 has a flat surface 13a cut by a plane that connects any one point "P" on its outer diameter surface to any two points "Q" and "R" at its end face.

When the four-point ball bearing 11 having the outer ring 13 as shown in Fig. 5 is mounted to a shaft, a recessed part is provided at a part corresponding to the cut flat surface 13a, in the housing and the housing and the outer ring 13 are fixed by the key 16, whereby a creep is prevented.

According to the above constitution, as compared with the conventional constitution, since an anticreep device having a simple structure can be provided, its finish processing can be simple and the number of processing steps can be reduced.

In addition, since the contact area between the cut flat surface 13a and the key 16 as shown in Fig. 6A is large, the contact stress between both members is small, so that abrasion of the key 16 due to vibration and the like can be prevented, and a high anticreep function can be maintained for a long period of time. In addition, in order to enhance the strength of the key corresponding to the cut flat surface 13a, a key 17 having a massive pillar part at the rear part of the abutment part of the cut flat surface 13a as shown in Fig. 6B may be used.

When the four-point contact ball bearing 11 is used as an insulated bearing for supporting a rotation shaft of an electric motor including a railcar main electric motor, a wind power generator, an inverter motor or the like, an insulation film is formed by spraying ceramic and the like to the outer diameter surface of the outer ring 13.

When the insulation film is formed on the outer diameter surface of the outer diameter 13 provided with the cut flat surface 13a, as shown in Fig. 4A, the insulation film can be uniformly formed on the cut flat surface and its vicinity by spraying from direction "A".

As a result, since the number of spraying steps of the insulation film can be reduced, the cost of the bearing can be low. In addition, the film thickness can be easily uniformed at each part.

In addition, an insulation film may be formed on the inner diameter surface of the inner ring 12 other than the outer diameter surface of the outer ring 13.

Although the cut flat surfaces 13a are provided at two parts of the outer ring 13 in the above embodiment, the present invention is not limited to this. For example, the cut flat surface 13a may be provided at one part or the cut flat surfaces 13a may be provided at two or more parts.

Furthermore, the angle formed between the cut flat surface 13a and a surface perpendicular to a bearing rotation axis is desirably about 45 degrees in view of the strength of the key 16 and a wedge effect as the anticreep device. When the angle is too small, the strength of the key 16 is lowered and when the angle is too large, the anti-creep function is lowered.

Although the four-point ball bearing is shown in the above embodiment, the present invention is not limited to this. For example, the present invention can be applied to various kinds of rolling bearings such as a deep groove ball bearing, an angular ball bearing, a self-aligning roller bearing, and a cylindrical roller bearing or a conical roller bearing regardless of the configuration of the bearing itself and whether the rolling element is a ball or roller.

Furthermore, although the single-row four-point contact ball bearing is shown in the above embodiment, the present invention is not limited to this. For example, the present invention can be applied to a double-row rolling bearing in which rolling elements are arranged in double rows between an inner ring and an outer ring.

Although the embodiments of the present invention have been described with reference to the drawings in the above, the present invention is not limited to the above-illustrated embodiments. Various kinds of modifications and variations may be added to the illustrated embodiments within the same or equal scope of the present invention.

### INDUSTRIAL APPLICABILITY

The present invention can be advantageously applied to a rolling bearing having an insulation layer on its race ring.

## Claims

1. A rolling bearing comprising:
an inner ring;
an outer ring; and
rolling elements arranged between said inner ring and said outer ring, wherein
said outer ring has a flat surface cut by a plane connecting any one point of its outer diameter surface to any two points of its end face.

2. The rolling bearing according to claim 1, wherein
an insulation film is formed on the outer diameter surface of said outer ring.

3. The rolling bearing according to claim 1, wherein
an insulation film is formed on the inner diameter surface of said inner ring.

4. The rolling bearing according to claim 1, wherein
said rolling element is a ball.

5. The rolling bearing according to claim 1, wherein
said rolling element is a roller.

## Amended claims

### Amended claims under Art. 19.1 PCT

**1.** (Amended) A rolling bearing comprising:
an inner ring;
an outer ring; and
rolling elements arranged between said inner ring and said outer ring, wherein
said outer ring has a flat surface cut by a plane connecting any one point of its outer diameter surface to any two points of its end face, and
an insulation film is formed on the outer diameter surface of said outer ring.

**2.** (Deleted)

**3.** (Amended) A rolling bearing comprising:
an inner ring;
an outer ring; and
rolling elements arranged between said inner ring and said outer ring, wherein
said outer ring has a flat surface cut by a plane connecting any one point of its outer diameter surface to any two points of its end face, and
an insulation film is formed on the inner diameter surface of said inner ring.

**4.** The rolling bearing according to claim 1, wherein
said rolling element is a ball.

**5.** The rolling bearing according to claim 1, wherein
said rolling element is a roller.

**6.** (Added) The rolling bearing according to claim 3, wherein
said rolling element is a ball.

**7.** (Added) The rolling bearing according to claim 3, wherein
said rolling element is a roller.

Statement under Art. 19.1 PCT
The present invention according to claim 1 after amendment is **characterized in that** the outer ring has a flat surface cut by a plane connecting any one point of its outer diameter surface to any two points of its end face, and an insulation film is formed on the outer diameter surface of the outer ring.

The flat surface on which the insulation film is formed is not disclosed in the document 1 (Japanese Utility Model Registration Application No. 51-060772) in which the novelty of the invention according to the claim 1 of the original application has been denied.

Since amendment is made such that the claim 2 of the original application is incorporated in claim 1, and claim 2 is deleted.

Although the claim 3 of the original application is in dependent form, it is amended to be in independent form this time. According to amended claim 3, it is **characterized in that** the outer ring has a flat surface cut by a plane connecting any one point of its outer diameter surface to any two points of its end face, and an insulation film is formed on the inner diameter surface of the inner ring.

The claims 4 and 5 of the original application are not changed.

Claims 6 and 7 are added this time.
